# EUROPEAN PATENT APPLICATION

(11) **EP 4 664 394 A1**
(43) Date of publication of application: **17.12.2025**
(21) Application number: 24382631.0
(22) Date of filing: 12.06.2024
(51) Int. Cl.: G06T 5/77, G06T 11/00

(54) **SYSTEMS AND METHODS OF MODIFYING AN INFINITE REPEAT PATTERN USING GENERATIVE ARTIFICIAL INTELLIGENCE**

(71) Applicant: Inedit Software S.L., 08394 Sant Vicenç de Montal (Barcelona) (ES)
(72) Inventor: NAVAL, David, 08394 Sant Vicenç de Montalt (ES)
(74) Representative: Mendigutía Gómez, Maria Manuela

(57) **Abstract**

Systems and methods for modifying an infinite repeat pattern of a digital image are disclosed. An infinite repeat pattern of a digital source image is obtained, and a modification area is selected that includes a plurality of duplicates of portions of the digital source image. Within the modification area, the borders between the duplicates, the joints between multiple borders, and the points where the borders meet the perimeter of the modification area are determined. The joints are centered along a central axis of the modification area. An additional selection area within the modification area is made based on the earlier-determined borders, joints, and points on the perimeter of the modification area. The additional selection area is modified using an artificial intelligence (Al) model to create an infinite repeat pattern without clearly visible borders and/or boundaries between the duplicates of the digital source image, and without other undesirable features.

## Description

### FIELD OF THE INVENTION

This description relates generally to systems and methods of textile printing specially applying generative artificial intelligence (Al) to digital images used for textile printing.

### BACKGROUND

In the textile printing industry, many designs are prepared to create an infinite repeat effect (i.e., a source image repeated across a piece of textile fabric). Infinite repeat effects are valuable in part because they are easily scalable and can be incorporated into a wide variety of fabric designs. Furthermore, the expansion of digital technology and artificial intelligence (Al) into textile design has greatly increased design variety and complexity in recent years, including in infinite repeat applications.

Using some modern software applications, designers can create an infinite repeat pattern by selecting a variety of different portions (also referred to as "drops") of one or more instances of a source image. These portions are repeated across the desired design space, and the pattern is modified to mitigate undesirable occurrences of pattern repetition, gaps, breaks, and/or other undesirable features in the pattern. However, modifying the pattern is often a time-intensive and expensive process. Moreover, existing image editing tools-including AI modification tools-are unable to adequately accommodate certain complex patterns and drop selections, limiting the designs to which an infinite repeat pattern can easily be applied.

### BRIEF DESCRIPTION OF THE DRAWINGS

Figure 1 illustrates a perspective view of a printing system, in accordance with one or more embodiments.
Figure 2 illustrates a side view of a printing system, in accordance with one or more embodiments.
Figure 3 is a flowchart of a method of generating and modifying an infinite repeat pattern, in accordance with one or more embodiments.
Figure 4 illustrates an example of generating an infinite repeat pattern, in accordance with one or more embodiments.
Figure 5 illustrates an example of modifying a selection of the infinite repeat pattern of Figure 4, in accordance with one or more embodiments.
Figure 6 shows an example implementation of an AI/ML system, in accordance with one or more embodiments.
Figure 7 is a block diagram illustrating an example computer system, in accordance with one or more embodiments.

### DETAILED DESCRIPTION

Systems and methods for modifying an infinite repeat pattern of a digital source image are disclosed. For example, in some embodiments, a repeating pattern (e.g., an infinite repeat) of a digital source image is obtained, and a selection is made defining a modification area including a plurality of repeats (e.g., duplicates and/or replicates of portions of the digital source image) within the pattern. Within the modification area, the borders between the repeats, the joints between multiple borders, and the points where the borders meet the perimeter of the modification area are determined and/or identified. The joints are centered along a central axis of the modification area. An additional selection area within the modification area is made that is based on and comprised of the borders between the repeats, the joints between the borders, and the points where the borders meet the perimeter of the modification area. The additional selection area within the modification area is modified using an artificial intelligence (Al) model, which in some embodiments, employs image processing modifications such as smoothing, blurring, blending, and harmonizing, to name a few, to create a continuous-looking infinite repeat pattern without clearly visible borders and/or boundaries between the various repeats of the digital source image and without other undesirable pattern features. Thus, the disclosed systems and methods produce an infinite repeat pattern that extends throughout a digital canvas space without introducing aberrations and/or visible artifacts.

Modification of repeated images is time consuming and expensive to perform. Existing modification tools (including existing Al models) do not perform adequately with patterns that are based on source images with aspect ratios different from one-to-one (1:1). One of the challenges when modifying more complicated images with existing AI models and software tools is that modifications to the vertical plane of the image can undesirably affect (e.g., distort) the pattern in the horizontal plane. This limits the complexity of repeated patterns to relatively simple aspect ratios of source images.

To help overcome this (and other) challenges, in some embodiments, the disclosed systems and methods provide a modification area within which borders, joints, and perimeter points of the duplicated portions of the digital source image are determined, and within which a selection area based on the borders, joints, and perimeter points is generated. In some embodiments, the selection area is comprised of one or more non-tapered sections that correspond to and are aligned with the borders between the repeats and the joints between the borders. The selection area is further comprised of one or more tapered sections that are positioned at each of the locations where the borders meet the perimeter of the modification area. The tapered sections are positioned such that the narrowest point of each of the tapered sections corresponds with and aligns to one of the points where the borders meet the perimeter of the modification area. By tapering the selection area in the vicinity of the perimeter points, the portions of the repeats in the selection area at these points can be modified simultaneously along both a vertical and horizontal axis of the modification area without causing undesirable pattern distortion or other undesirable pattern effects that otherwise result from trying to modify along the vertical or horizontal axis individually. Thus, one of the benefits of the disclosed technology is the ability to quickly and adequately modify repeat patterns based on source images that have more complicated aspect ratios than 1:1. This expands the utility of applying AI models to modify a much wider range of infinite repeat patterns.

### Printing System

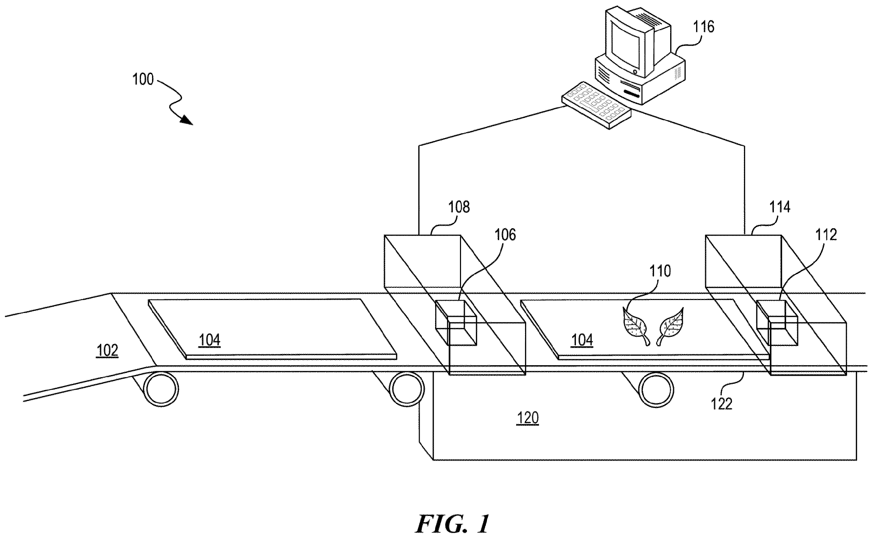

Figure 1 illustrates a perspective view of a printing system 100, in accordance with one or more embodiments. The printing system 100 can be used to print images that were modified using the disclosed technology onto textile substrates. The printing system 100 includes a printer head 106, at least one light source 112, and a substrate transportation system 102. Embodiments may include various combinations of these and other components, e.g., a dryer. For example, the light source 112 may be present in some embodiments, but not in others. As another example, a dryer may be included if an image 110 will not be quickly transferred to a substrate. The substrate transportation system 102 can include a belt, actuators, pulleys, etc., to move the substrate. While the printing system 100 of Figure 1 can include a transfer belt, other means for conveying and/or retaining a substrate or transfer material 104 can also be used, such as a rotating platform or stationary bed.

The printer head 106 is configured to deposit ink onto a substrate or the transfer material 104 in the form of an image 110. The transfer material 104, which may also be referred to as a former material, is flexible, which allows the image 110 to be transferred to complex-shaped substrates. For example, the transfer material 104 may be a rubber former, a thermoformable material, etc. In some embodiments, the printer head 106 is an inkjet printer head that jets ink onto the substrate or the transfer material 104 using, for example, piezoelectric nozzles. Thermal printer heads are generally avoided in an effort to avoid premature sublimation of the ink. In some embodiments, the ink is a solid energy, e.g., UV curable ink. However, other inks may also be used, such as water-based energy curable inks or solvent-based energy curable inks. The ink can be deposited in different forms, such as ink droplets and colored polyester ribbons.

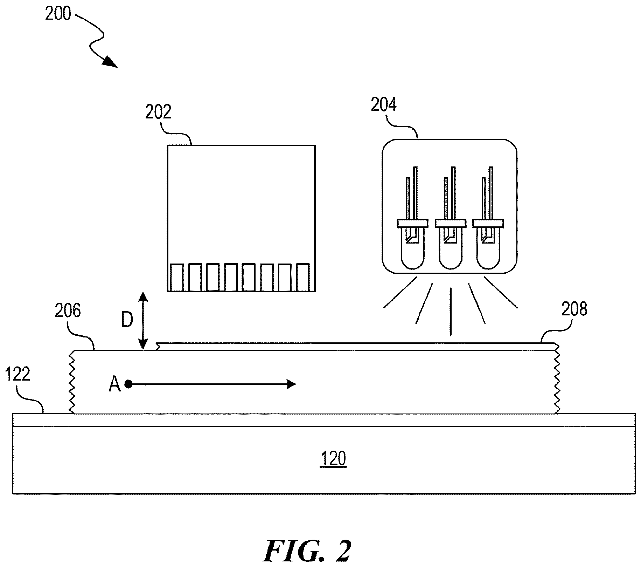

In some embodiments, one or more light sources 112 cure some or all of the ink deposited onto the substrate or the transfer material 104 by emitting UV radiation. The light source(s) 112 may be, for example, a UV fluorescent bulb, a UV light-emitting diode (LED), a low-pressure, e.g., mercury (Hg) bulb, or an excited dimer (excimer) lamp and/or laser. Various combinations of these light sources could be used. For example, a printing system 100 may include a low-pressure Hg lamp and a UV LED. As discussed in more detail with reference to Figure 2, the light source 112 may be configured to emit UV radiation of a particular subtype.

The printer head 106 and light source 112 are illustrated as being directly adjacent to one another, i.e., neighboring without any intervening components. However, additional components that assist in printing, curing, etc., may also be present. For example, multiple distinct light sources 112 may be positioned behind the printer head 106. Figure 1 illustrates one possible order in which components may be arranged in order to print an image 110 onto the substrate or the transfer material 104. Other embodiments are considered in which additional components are placed before, between, or after the illustrated components, etc.

In some embodiments, one or more of the aforementioned components are housed within one or more carriages. For example, the printer head 106 can be housed within a printing carriage 108, the light source 112 can be housed within a curing carriage 114, etc. In addition to protecting the components from damage, the carriages may also serve other benefits. For example, the curing carriage 114 can limit what portion(s) of the transfer material 104 and image 110 are exposed during the curing process. The printing system 100 may include pulleys, motors, rails, and/or any combination of mechanical or electrical technologies that enable the carriages to travel along the substrate transportation system 102 (e.g., the transfer belt), i.e., with respect to the substrate or the transfer material 104. The transfer belt is affixed to a vacuum table 120 and moves over a vacuum platen 122 that is on top of the vacuum table 120. In alternative embodiments, the carriages can be fixedly attached to a rail or base of the printing system 100. In these embodiments, the transfer material 104 can be moved in relation to the printer head 106, light source 112, etc., such that ink can be deposited onto the transfer material 104.

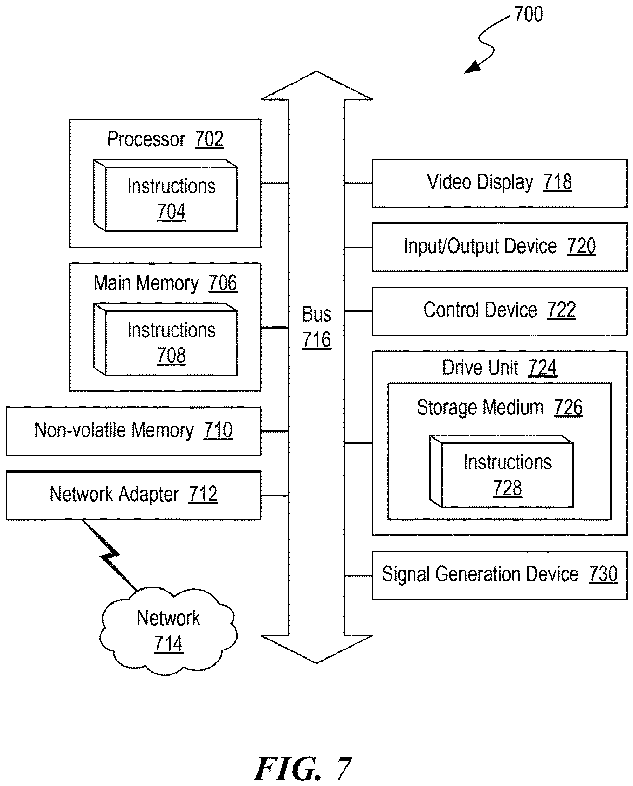

In various embodiments, some or all of the components are controlled by a computer system 116. The computer system 116 is the same as or similar to the computer system 700 illustrated and described in more detail with reference to Figure 7. The computer system 116 can allow a user to input printing instructions and information, modify print settings (e.g., by changing cure settings), alter the printing process, etc.

Figure 2 illustrates a side view of a printing system 200, including a printer head 202 and a light source 204, in accordance with one or more embodiments. While a single-pass configuration is illustrated by Figure 2, other embodiments may employ multi-pass, i.e., scan, configurations. Similarly, embodiments can be modified for various printers, e.g., flatbed printer, drum printer, or lane printer. For example, a flatbed printer may include a stable bed and a traversing printer head, a stable printer head and a traversing bed, etc. A substrate transportation system 120 is affixed to a vacuum table 120 and moves over a vacuum platen 122 that is on top of the vacuum table 120.

The printer head 202 can include distinct ink/color drums, e.g., cyan, magenta, yellow, and black (CMYK), or colored polyester ribbons that are deposited onto the surface of a transfer material 206. Path A represents the media feed direction, e.g., the direction in which the substrate or the transfer material 206 travels during the printing process. Path D represents the distance between the printer head 202 and the surface of the transfer material 206.

In some embodiments, a light source 204 cures some or all of the ink 208 deposited onto the substrate or the transfer material 206 by the printer head 202. The light source 204 may be configured to emit wavelengths of UV electromagnetic radiation of subtype V (UVV), subtype A (UVA), subtype B (UVB), subtype C (UVC), or any combination thereof. Generally, UVV wavelengths are those wavelengths measured between 395 nanometers (nm) and 445 nm, UVA wavelengths measured between 315 nm and 395 nm, UVB wavelengths measured between 280 nm and 315 nm, and UVC wavelengths measured between 100 nm and 280 nm. However, one skilled in the art will recognize these ranges are somewhat adjustable. For example, some embodiments may characterize wavelengths of 285 nm as UVC.

The light source 204 may be, for example, a fluorescent bulb, an LED, a low-pressure, e.g., mercury (Hg) bulb, or an excited dimer (excimer) lamp/laser. Combinations of different light sources could be used in some embodiments. Generally, the light source 204 is selected to ensure that the curing temperature does not exceed the temperature at which the ink 208 begins to sublime. For example, light source 204 of Figure 2 is a UV LED lamp that generates low heat output and can be used for a wider range of former types. UV LED lamps are associated with lower power consumption, longer lifetimes, and more predictable power output.

Other curing processes may also be used, such as epoxy (resin) chemistries, flash curing, and electron beam technology. One skilled in the art will appreciate that many different curing processes could be adopted that utilize specific timeframes, intensities, rates, etc. The intensity may increase or decrease linearly or non-linearly, e.g., exponentially, or logarithmically. In some embodiments, the intensity may be altered using a variable resistor or alternatively by applying a pulse-width-modulated (PWM) signal to the diodes in the case of an LED light source.

### Generating and Modifying an Infinite Repeat Pattern using Artificial Intelligence (Al)

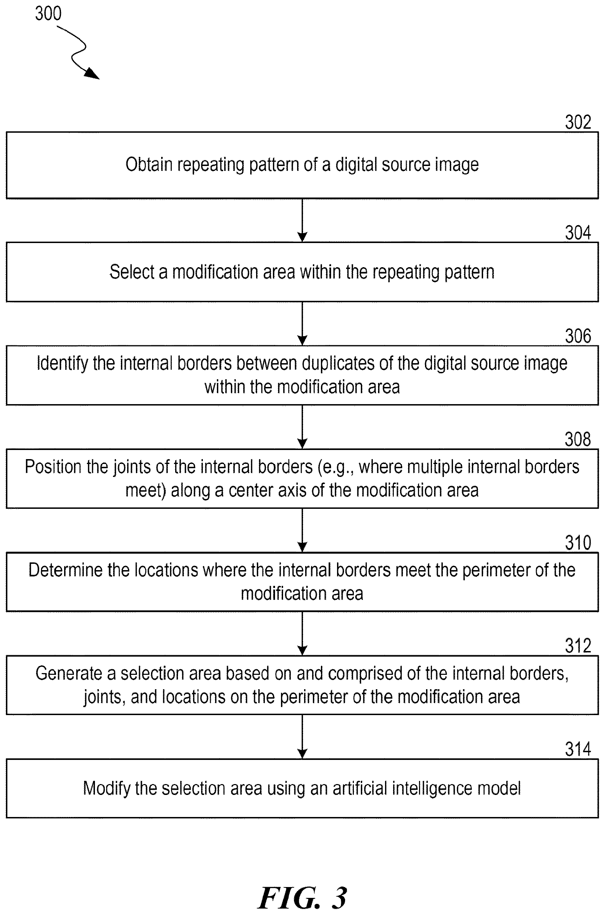

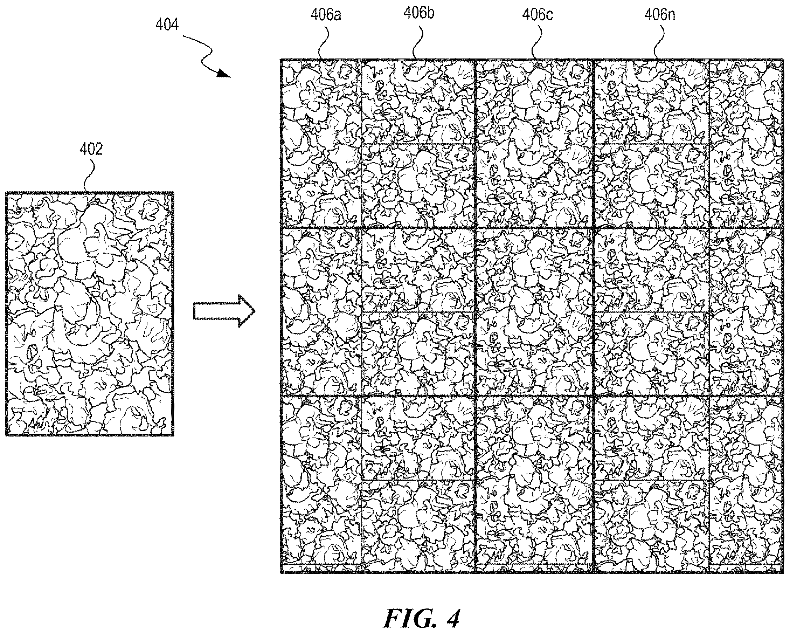

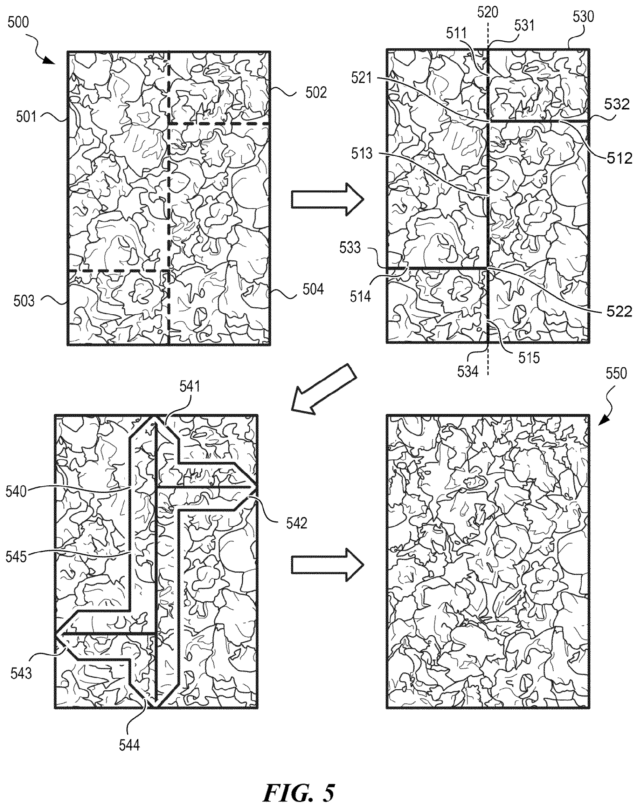

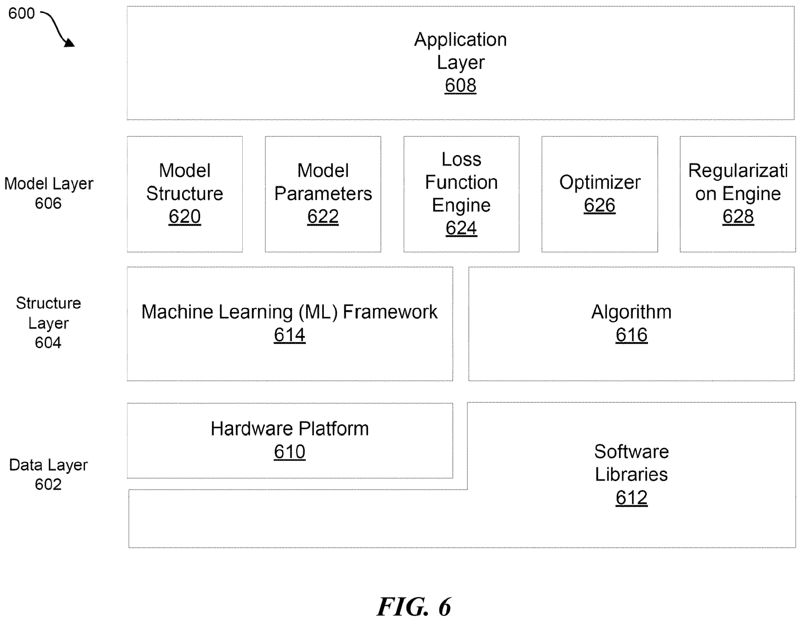

Figure 3 is a flowchart of a method 300 of generating and modifying an infinite repeat pattern, in accordance with one or more embodiments. Figure 4 illustrates an example of generating an infinite repeat pattern, in accordance with one or more embodiments. Figure 5 illustrates an example of modifying a selection of the infinite repeat pattern of Figure 4, in accordance with one or more embodiments. For clarification, method 300 will be discussed in the context of Figure 4 and Figure 5, though it will be acknowledged that these Figures provide only one example and/or embodiment of many possible examples and/or embodiments. In some embodiments, some or all of the steps of method 300 can be performed using the artificial intelligence (Al) and/or machine learning (ML) system 600 described below with reference to Figure 6. In some embodiments, some or all of the steps of method 300 can be performed using the computer system 700 described below with reference to Figure 7.

At step 302, a repeating pattern of a digital source image is obtained. In some embodiments, the repeating pattern can include a plurality of portions of the digital source image duplicated throughout a given area (also referred to as repeats). For the purposes of the disclosed technology, a given area can include a digital canvas or other virtual space or platform where digital artwork, images, and/or designs can be created, edited, or otherwise modified. The source image can be any aspect ratio (e.g., 1:1, 1:1.5, etc.), and the repeating portions can be comprised of any portion or subsample of the digital source image. In some embodiments, the plurality of duplicates includes at least three (or more, e.g., four, five, six, etc.) repeated portions of the digital source image. In some embodiments, at least one of the plurality of repeated portions of the modification area is comprised of less than 50 percent (e.g., 45 percent, 25 percent, 5 percent, etc.) of the digital source image. The repeating pattern can further include duplicates of half the source image or greater, or even the entire source image (e.g., 50 percent, 75 percent, 100 percent, etc.) In some embodiments, the repeating pattern can be comprised of a mix of portions of the digital source image and the entire source image duplicated across the digital canvas (e.g., some duplicates of 30 percent, some duplicates of 50 percent, some duplicates of 100 percent of the source image). For example, as shown in Figure 4, selections of portions of a digital source image 402 of a 1:1.5 aspect ratio are made to obtain a repeating pattern 404 comprised of duplicates of a first portion 406a, duplicates of a second portion 406b, duplicates of the entire image 406c, and duplicates of "n" additional portions of the repeating pattern 406n.

At step 304, a modification area within the repeating pattern is selected. The modification area includes a plurality of the duplicated portions that comprise the repeating pattern. In some embodiments, the modification area can include all of the portions and/or entire images duplicated on the digital canvas. In some embodiments, only a subset of portions and/or entire images comprise the plurality of duplicated portions within the modification area. For example, as shown in Figure 5, modification area 500 is selected from a repeating pattern (e.g., repeating pattern 404) where the selection includes a first duplicated portion 501, a second duplicated portion 502, a third duplicated portion 503, and a fourth duplicated portion 504. For clarity, the duplicated portions are delimited by a dashed line. In the example, each of the duplicated portions 501-504 represents a different portion of the digital source image, but alternative examples can include one or more of the duplicated portions representing the same portion of the digital source image.

At step 306, one or more internal borders of each of the duplicated portions within the modification area is identified. In some embodiments, each of the internal borders includes one or more points where two of the duplicated portions meet each other. For example, where four or more duplicated portions meet at a common point, the one or more points where adjacent duplicated portions meet are included as internal borders, and the one point shared by opposite duplicated portions (e.g., the common point) is included as an internal border. In some embodiments, each of the internal borders includes the length or edge along which two of the duplicated portions meet each other within the modification area. For example, an internal border can include the shared interface between a first portion and a second portion of the plurality of duplicated portions within the modification area. As shown in Figure 5, a plurality of borders are identified, specifically: a first border 511 between the first duplicated portion 501 and the second duplicated portion 502; a second border 512 between the second duplicated portion 502 and the fourth duplicated portion 504; a third border 513 between the first duplicated portion 501 and the fourth duplicated portion 504; a fourth border 514 between the first duplicated portion 501 and the third duplicated portion 503; and a fifth border 515 between the third duplicated portion 503 and the fourth duplicated portion 504.

At step 308 one or more joints within the modification area are determined and positioned such that they are aligned along a center axis of the modification area. Each of the one or more joints includes a point where a plurality (e.g., two, three, four, five etc.) of the internal borders meet each other. For example, a joint can include the meeting point of a first border between a first and second duplicate portion, a second border between a second and third duplicate portion, and a third border between a first and third duplicate portion. In some embodiments, the joints are positioned along a central axis of the modification area, enabling modification of more complicated aspect ratios than 1:1. Referring to Figure 5, a first joint 521 comprised of the point where the first border 511, second border, 512, and third border 513 meet is centered along a central axis 520 of the modification area. A second joint 522 comprised of the point where the third border 513, fourth border 514, and fifth border 515 meet is likewise centered along the central axis 520.

At step 310 a plurality of locations where the internal borders meet the perimeter of the modification area is determined. The plurality of locations (also referred to as "perimeter points") include the points where each of the internal borders meets the perimeter. For example, the point where a first border meets the perimeter of the modification area is one of the plurality of locations. In some embodiments, the plurality of locations can include multiple points from the same border where the border meets the perimeter at multiple locations. In some embodiments, each of the plurality of points is comprised of a single location where a single border meets the perimeter. In some embodiments, all of the internal borders meet the perimeter at at least one point. In some embodiments, at least one of the internal borders does not include a point where the border meets the perimeter of the modification area. Referring to Figure 5, the plurality of locations can include: a first perimeter point 531 that includes the point where the first border 511 meets the perimeter 530 of the modification area; a second perimeter point 532 that includes the point where the second border 512 meets the perimeter 530; a third perimeter point 533 that includes the point where the fourth border 514 meets the perimeter 530; and a fourth perimeter point 534 that includes the point where the fifth border 515 meets the perimeter 530. The third border 513 does have a point where it meets the perimeter 530.

At step 312, a selection area based on each of the internal borders, the joints, and the perimeter points is generated. The selection area further includes parts or portions of the plurality of duplicated portions of the digital source image within the modification area. These parts of the modification area are included in what is ultimately modified. The boundaries of the selection area can be configured to extend to include substantially all of each of the plurality of duplicated portions of the digital source image (e.g., substantially all of the modification area), or can be configured to include a relatively narrow area of each of the duplicated portions. In some embodiments, a selection area based on a subset of the internal borders, joints and perimeter points is generated. Referring to Figure 5, a selection area 540 is generated based on: the first, second, third, fourth, and fifth borders 511, 512, 513, 514, and 515, respectively; the first and second joints 521, and 522, respectively; and the first, second, third, and fourth perimeter points 531, 532, 533, and 534, respectively.

In some embodiments, the selection area is comprised of one or more non-tapered sections that correspond to and are aligned with the internal borders between the duplicates and the joints between the internal borders. The non-tapered sections can be configured to have boundaries that extend to include as much or as little of the underlying parts of the duplicated portions as desired. In some embodiments, the selection area is further comprised of one or more tapered sections that are positioned at each of the locations where the borders meet the perimeter of the modification area (e.g., the perimeter points). The tapered sections are positioned such that the narrowest point of each of the tapered sections corresponds with and aligns to one of the perimeter points. The non-tapered section can connect each of the tapered sections to create a continuous selection area. The extent of the taper (e.g., the length of the taper, the degree of the taper angle relative to the non-tapered sections, the area of the duplicated portions underlying the taper, etc.) can be adjusted to include as much or as little of the parts of the duplicated portions near the perimeter points as desired. By tapering the selection area in the vicinity of the perimeter points, the portions of the repeats in the selection area at these points can be modified simultaneously along both a vertical and horizontal axis of the modification area without causing undesirable pattern distortion or other undesirable pattern effects that otherwise result from trying to modify along the vertical or horizontal axis individually.

For example, referring to Figure 5, the selection area 540 is comprised of: a first tapered section 541 corresponding to and aligned with the first perimeter point 531; a second tapered section 542 corresponding to and aligned with the second perimeter point 532; a third tapered section 543 corresponding to and aligned with the third perimeter point 533; a fourth tapered section 544 corresponding to and aligned with the fourth perimeter point 534; and a non-tapered section 545 that connects the tapered sections 541-544 and corresponds to and is aligned with the first border 511, second border 512, third border 513, fourth border 514, fifth border 515, first joint 521, and second joint 522.

At step 314, an AI model is used to modify the generated selection area such that at least a part of one or more of the plurality of duplicated portions of the modification area are modified. In some embodiments, the part or parts of the duplicated portions underlying or within the generated selection area are the parts that are modified. In some embodiments, the AI model can modify the selection area using any combination of blending, smoothing, blurring, feathering, fading, anti-aliasing, softening, smudging, diffusing, merging, harmonizing or any other image editing tool. Referring to Figure 5, the AI model modifies the parts of the duplicated portions within the selection area 540 to create a modified modification area 550. Thus, parts of the duplicated portions within the selection area are altered and/or modified, which alters and/or modifies the modification area and consequently, the repeating pattern of the digital source image. Accordingly, a repeating pattern is produced that extends throughout the digital canvas space without introducing aberrations and/or visible artifacts.

Figure 6 shows an example implementation of an AI/ML system, in accordance with one or more embodiments. Figure 6 illustrates a layered architecture of an AI system 600 that can implement ML models, in accordance with some implementations of the present technology.

As shown, the AI system 600 can include a set of layers, which conceptually organize elements within an example network topology for the AI system's architecture to implement a particular Al model. Generally, an AI model is a computer-executable program implemented by the AI system 600 that analyzes data to make predictions. Information can pass through each layer of the AI system 600 to generate outputs for the AI model. The layers can include a data layer 602, a structure layer 604, a model layer 606, and an application layer 608. The algorithm 616 of the structure layer 604 and the model structure 620 and model parameters 622 of the model layer 606 together form an example AI model. The optimizer 626, loss function engine 624, and regularization engine 628 work to refine and optimize the AI model, and the data layer 602 provides resources and support for application of the AI model by the application layer 608. The application layer 608 can include, in whole or in part, a model execution engine. For example, the model execution engine can provide feature data to one or more trained AI models described herein and can cause (e.g., by executing an instruction set or prompt using the framework 614) the AI model to execute.

The data layer 602 acts as the foundation of the AI system 600 by preparing data for the AI model. As shown, the data layer 602 can include two sublayers: a hardware platform 610 and one or more software libraries 612. The hardware platform 610 can be designed to perform operations for the AI model and include computing resources for storage, memory, logic and networking. The hardware platform 610 can process amounts of data using one or more servers. The servers can perform backend operations such as matrix calculations, parallel calculations, ML training, and the like. Examples of servers used by the hardware platform 610 include central processing units (CPUs) and graphics processing units (GPUs). CPUs are electronic circuitry designed to execute instructions for computer programs, such as arithmetic, logic, controlling, and input/output (I/O) operations, and can be implemented on integrated circuit (IC) microprocessors. GPUs are electric circuits that were originally designed for graphics manipulation and output but may be used for AI applications due to their vast computing and memory resources. GPUs use a parallel structure that generally makes their processing more efficient than that of CPUs. In some instances, the hardware platform 610 can include Infrastructure as a Service (laaS) resources, which are computing resources, (e.g., servers, memory, etc.) offered by a cloud services provider. The hardware platform 610 can also include computer memory for storing data about the AI model, application of the AI model, and training data for the AI model. The computer memory can be a form of random-access memory (RAM), such as dynamic RAM, static RAM, and non-volatile RAM.

The software libraries 612 can be thought of as suites of data and programming code, including executables, used to control the computing resources of the hardware platform 610. The programming code can include low-level primitives (e.g., fundamental language elements) that form the foundation of one or more low-level programming languages, such that servers of the hardware platform 610 can use the low-level primitives to carry out specific operations. The low-level programming languages do not require much, if any, abstraction from a computing resource's instruction set architecture, allowing them to run quickly with a small memory footprint. Examples of software libraries 612 that can be included in the AI system 600 include Intel Math Kernel Library, Nvidia cuDNN, Eigen, and Open BLAS.

The structure layer 604 can include an ML framework 614 and one or more of an algorithm 616. The ML framework 614 can be thought of as an interface, library, or tool that allows users to build and deploy the AI model. The ML framework 614 can include an open-source library, an application programming interface (API), a gradient-boosting library, an ensemble method, and/or a deep learning toolkit that can work with the layers of the AI system to facilitate development of the AI model. For example, the ML framework 614 can distribute processes for application or training of the AI model across multiple resources in the hardware platform 610. The ML framework 614 can also include a set of pre-built components that have the functionality to implement and train the AI model and allow users to use pre-built functions and classes to construct and train the AI model. Thus, the ML framework 614 can be used to facilitate data engineering, development, hyperparameter tuning, testing, and training for the AI model. Examples of ML frameworks 614 that can be used in the AI system 600 include TensorFlow, PyTorch, Scikit-Learn, Keras, Cafffe, LightGBM, Random Forest, and Amazon Web Services.

The algorithm 616 can be an organized set of computer-executable operations used to generate output data from a set of input data and can sometimes be described using pseudocode. The algorithm 616 can include complex code that allows the computing resources to learn from new input data and create new/modified outputs based on what was learned.

The algorithm 616 can build the AI model through being trained (e.g., via a model training engine, which can include a user interface having controls sufficient to enable a user to interact with the model, label data, and so forth) while running computing resources of the hardware platform 610. This training allows the algorithm 616 to make predictions or decisions without being explicitly programmed to do so. Once trained, the algorithm 616 can run at the computing resources as part of the AI model to make predictions or decisions, improve computing resource performance, or perform tasks. The algorithm 616 can be trained using supervised learning, unsupervised learning, semi-supervised learning, and/or reinforcement learning.

Using supervised learning, the algorithm 616 can be trained to learn patterns (e.g., map input data to output data) based on labeled training data. The training data may be labeled by an external user or operator. The user may label the training data with identifiers of one or more classes (e.g., monitoring categories, maintenance activity types, repair activity types, maintenance event classifications) and train the AI model by inputting the training data (e.g., via the user interface of the model training engine) to the algorithm 616. The algorithm determines how to label the new data, such as items from additional data sets and/or their corresponding outputs, based on the labeled training data.

The user can facilitate collection, labeling, and/or input via the ML framework 614. In some instances, the user may convert the training data to a set of feature vectors for input to the algorithm 616. For example, the system may vectorize items to facilitate item comparisons via techniques such as semantic search. Once trained, the user can test the algorithm 616 on new data to determine if the algorithm 616 is predicting accurate labels for the new data. For example, the user can use cross-validation methods to test the accuracy of the algorithm 616 and retrain the algorithm 616 on new training data if the results of the cross-validation are below an accuracy threshold.

Supervised learning can involve classification and/or regression. That is, the algorithm 616 can be a classification- and/or regression-based algorithm. Classification techniques involve teaching the algorithm 616 to identify a category of new observations based on training data, and such techniques are used when input data for the algorithm 616 is discrete. Said differently, when learning through classification techniques, the algorithm 616 receives training data labeled with categories (e.g., classes) and determines how features observed in the training data relate to the categories. Once trained, the algorithm 616 can categorize new data by analyzing the new data for features that map to the categories, such as maintenance- and/or lifecycle-related events ("new asset," "preventative maintenance," "failure," "repair," and/or "rebuild"). Examples of classification techniques include boosting, decision tree learning, genetic programming, learning vector quantization, k-nearest neighbor (k-NN) algorithm, and statistical classification.

Regression techniques involve estimating relationships between independent and dependent variables and can be used when input data to the algorithm 616 is continuous or time-series. Regression techniques can be used to train the algorithm 616 to predict or forecast relationships between variables. To train the algorithm 616 using regression techniques, a user can select a regression method for estimating the parameters of the model. The user collects and labels training data that is input to the algorithm 616 such that the algorithm 616 is trained to understand the relationship between data features and the dependent variable(s). Once trained, the algorithm 616 can predict missing historic data or future outcomes based on input data. Examples of regression methods include linear regression, multiple linear regression, logistic regression, regression tree analysis, least squares method, and gradient descent. In an example implementation, regression techniques can be used, for example, to estimate and fill in missing data for ML-based pre-processing operations. In an example, a particular AI/ML model can be an imputer trained to fill in missing data values.

The model layer 606 can implement the AI model using data from the data layer and the algorithm 616 and ML framework 614 from the structure layer 604, thus enabling decision-making capabilities of the AI system 600. The model layer 606 can include any of a model structure 620, model parameters 622, a loss function engine 624, an optimizer 626, and a regularization engine 628.

The model structure 620 describes the architecture of the AI model of the AI system 600. The model structure 620 defines the complexity of the pattern/relationship that the AI model expresses. Examples of structures that can be used as the model structure 620 include decision trees, support vector machines, regression analyses, Bayesian networks, Gaussian processes, genetic algorithms, and artificial neural networks (or, simply, neural networks). The model structure 620 can include a number of structure layers, a number of nodes (or neurons) at each structure layer, and activation functions of each node. Each node's activation function defines how the node converts data received to data output. The structure layers may include an input layer of nodes that receive input data and an output layer of nodes that produce output data. The model structure 620 may include one or more hidden layers of nodes between the input and output layers. The model structure 620 can be an Artificial Neural Network (or, simply, neural network) that connects the nodes in the structured layers such that the nodes are interconnected. Examples of neural networks include Feedforward Neural Networks, convolutional neural networks (CNNs), Recurrent Neural Networks (RNNs), Autoencoder, and Generative Adversarial Networks (GANs).

The model parameters 622 represent the relationships learned by a model during training and can be used to make predictions and decisions based on input data. The model parameters 622 can weight and bias the nodes and connections of the model structure 620. For instance, when the model structure 620 is a neural network, the model parameters 622 can weight and bias the nodes in each layer of the neural networks, such that the weights determine the strength of the nodes and the biases determine the thresholds for the activation functions of each node. The model parameters 622, in conjunction with the activation functions of the nodes, determine how input data is transformed into desired outputs. The model parameters 622 can be automatically determined and/or altered during training of the algorithm 616.

The loss function engine 624 can determine a loss function, which is a metric used to evaluate the AI model's performance during training. For instance, the loss function engine 624 can measure the difference between a predicted output of the AI model and the actual output of the AI model and is used to guide optimization of the AI model during training to minimize the loss function. The loss function may be presented via the ML framework 614, such that a user can determine whether to retrain or otherwise alter the algorithm 616 if the loss function is over a threshold. In some instances, the algorithm 616 can be retrained automatically if the loss function is over the threshold. Examples of loss functions include a binary-cross entropy function, hinge loss function, regression loss function (e.g., mean square error, quadratic loss, etc.), mean absolute error function, smooth mean absolute error function, log-cosh loss function, and quantile loss function.

The optimizer 626 adjusts the model parameters 622 to minimize the loss function during training of the algorithm 616. In other words, the optimizer 626 uses the loss function generated by the loss function engine 624 as a guide to determine what model parameters lead to the most accurate AI model. Examples of optimizers include Gradient Descent (GD), Adaptive Gradient Algorithm (AdaGrad), Adaptive Moment Estimation (Adam), Root Mean Square Propagation (RMSprop), Radial Base Function (RBF) and Limited-memory BFGS (L-BFGS). The type of optimizer 626 used may be determined based on the type of model structure 620 and the size of data and the computing resources available in the data layer 602.

The regularization engine 628 executes regularization operations. Regularization is a technique that prevents over- and under-fitting of the AI model. Overfitting occurs when the algorithm 616 is overly complex and too adapted to the training data, which can result in poor performance of the AI model. Underfitting occurs when the algorithm 616 is unable to recognize even basic patterns from the training data such that it cannot perform well on training data or on validation data. The optimizer 626 can apply one or more regularization techniques to fit the algorithm 616 to the training data properly, which helps constrain the resulting AI model and improves its ability for generalized application. Examples of regularization techniques include lasso (L1) regularization, ridge (L2) regularization, and elastic (L1 and L2 regularization).

The application layer 608 describes how the AI system 600 is used to solve problems or perform tasks. In an example implementation, the application layer 608 can include one or more programs.

Figure 7 is a block diagram illustrating an example computer system, in accordance with one or more embodiments. Components of the example computer system 700 can be used to implement the systems 100, 200, and 600 illustrated and described in more detail with reference to Figures 1, 2, 3, and 6. At least some operations described with reference to Figure 3 can be implemented on the computer system 700. Likewise, other embodiments include different and/or additional components or can be connected in a different way.

The computer system 700 can include one or more central processing units ("processors") 702, main memory 706, non-volatile memory 710 (also referred to as non-transitory memory), network adapter 712 (e.g., network interface), video display 718, input/output devices 720, control device 722 (e.g., keyboard and pointing devices), drive unit 724 including a storage medium 726, and a signal generation device 730 that are communicatively connected to a bus 716. The bus 716 is illustrated as an abstraction that represents one or more physical buses and/or point-to-point connections that are connected by appropriate bridges, adapters, or controllers. The bus 716, therefore, can include a system bus, a Peripheral Component Interconnect (PCI) bus or PCI-Express bus, a HyperTransport or industry standard architecture (ISA) bus, a small computer system interface (SCSI) bus, a universal serial bus (USB), an IIC (I2C) bus, or an Institute of Electrical and Electronics Engineers (IEEE) standard 1394 bus (also referred to as "Firewire").

The computer system 700 can share a similar computer processor architecture as that of a desktop computer, tablet computer, personal digital assistant (PDA), mobile phone, game console, music player, wearable electronic device (e.g., a watch or fitness tracker), network-connected ("smart") device (e.g., a television or home assistant device), virtual/augmented reality system (e.g., a head-mounted display), or another electronic device capable of executing a set of instructions (sequential or otherwise) that specify action(s) to be taken by the computer system 700.

While the main memory 706, non-volatile memory 710, and storage medium 726 (also called a "machine-readable medium") are shown to be a single medium, the term "machine-readable medium" and "storage medium" should be taken to include a single medium or multiple media (e.g., a centralized/distributed database and/or associated caches and servers) that store one or more sets of instructions 728. The term "machine-readable medium" and "storage medium" shall also be taken to include any medium that is capable of storing, encoding, or carrying a set of instructions for execution by the computer system 700.

In general, the routines executed to implement the embodiments of the disclosure may be implemented as part of an operating system or a specific application, component, program, object, module, or sequence of instructions (collectively referred to as "computer programs"). The computer programs typically include one or more instructions (e.g., instructions 704, 708, 728) set at various times in various memory and storage devices in a computing device. When read and executed by the one or more processors 702, the instruction(s) cause the computer system 700 to perform operations to execute elements involving the various aspects of the disclosure.

Moreover, while embodiments have been described in the context of fully functioning computing devices, those skilled in the art will appreciate that the various embodiments are capable of being distributed as a program product in a variety of forms. The disclosure applies regardless of the particular type of machine or computer-readable media used to actually effect the distribution.

Further examples of machine-readable storage media, machine-readable media, or computer-readable media include recordable-type media such as volatile and non-volatile memory 710, floppy and other removable disks, hard disk drives, optical disks (e.g., Compact Disk Read-Only Memory (CD-ROMS), Digital Versatile Disks (DVDs)), and transmission-type media such as digital and analog communication links.

The network adapter 712 enables the computer system 700 to mediate data in a network 714 with an entity that is external to the computer system 700 through any communication protocol supported by the computer system 700 and the external entity. The network adapter 712 can include a network adapter card, a wireless network interface card, a router, an access point, a wireless router, a switch, a multilayer switch, a protocol converter, a gateway, a bridge, a bridge router, a hub, a digital media receiver, and/or a repeater.

The network adapter 712 may include a firewall that governs and/or manages permission to access/proxy data in a computer network and tracks varying levels of trust between different machines and/or applications. The firewall can be any number of modules having any combination of hardware and/or software components able to enforce a predetermined set of access rights between a particular set of machines and applications, machines and machines, and/or applications and applications (e.g., to regulate the flow of traffic and resource sharing between these entities). The firewall may additionally manage and/or have access to an access control list that details permissions including the access and operation rights of an object by an individual, a machine, and/or an application, and the circumstances under which the permission rights stand.

The techniques introduced here can be implemented by programmable circuitry (e.g., one or more microprocessors), software and/or firmware, special-purpose hardwired (i.e., non-programmable) circuitry, or a combination of such forms. Special-purpose circuitry can be in the form of one or more application-specific integrated circuits (ASICs), programmable logic devices (PLDs), field-programmable gate arrays (FPGAs), etc.

The description and drawings herein are illustrative and are not to be construed as limiting. Numerous specific details are described to provide a thorough understanding of the disclosure. However, in certain instances, well-known details are not described in order to avoid obscuring the description. Further, various modifications may be made without deviating from the scope of the embodiments.

The terms used in this specification generally have their ordinary meanings in the art, within the context of the disclosure, and in the specific context where each term is used. Certain terms that are used to describe the disclosure are discussed above, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that the same thing can be said in more than one way. One will recognize that "memory" is one form of a "storage" and that the terms may on occasion be used interchangeably.

Consequently, alternative language and synonyms may be used for any one or more of the terms discussed herein, but no special significance is to be placed upon whether or not a term is elaborated or discussed herein. Synonyms for certain terms are provided. A recital of one or more synonyms does not exclude the use of other synonyms. The use of examples anywhere in this specification including examples of any term discussed herein is illustrative only and is not intended to further limit the scope and meaning of the disclosure or of any exemplified term. Likewise, the disclosure is not limited to various embodiments given in this specification.

It is to be understood that the embodiments and variations shown and described herein are merely illustrative of the principles of this invention and that various modifications may be implemented by those skilled in the art.

## Claims

1. A method of modifying a repeating pattern of a digital source image, the method comprising:
obtaining the repeating pattern of the digital source image, the repeating pattern including a plurality of at least portions of the digital source image duplicated throughout a given area;
selecting a modification area within the repeating pattern, the modification area including a plurality of the duplicated portions;
identifying one or more internal borders of each of the duplicated portions within the modification area, wherein each of the internal borders includes one or more points where two of the duplicated portions meet each other;
positioning one or more joints within the modification area such that the joints are aligned along a center axis of the modification area, wherein each of the joints includes a point where a plurality of the identified internal borders meet each other;
determining a plurality of locations where the identified internal borders meet the perimeter of the modification area;
generating a selection area based on the positioned one or more joints, the identified one or more internal borders, and the determined plurality of locations; and
modifying, using an artificial intelligence (Al) model, the generated selection area such that at least a part of one or more of the plurality of duplicated portions of the modification area is modified;
wherein modifying the modification area alters the repeating pattern of the digital source image.

2. The method of claim 1, wherein the generated selection area is further comprised of one or more non-tapered sections and one or more tapered sections, wherein the non-tapered sections are aligned with the one or more internal borders and the tapered sections are positioned at each of the determined plurality of locations where the internal borders meet the perimeter of the modification area.

3. The method of claim 2, wherein the narrowest point of each of the one or more tapered sections aligns with a corresponding one of the determined plurality of locations where the internal borders meet the perimeter of the modification area.

4. The method of claim 2, wherein the one or more tapered sections are configured to facilitate modification of each of the determined plurality of locations such that modification along a vertical axis of the modification area is simultaneous with modification along a horizontal axis of the modification area.

5. The method of claim 1, wherein the plurality of duplicated portions of the selected modification area is comprised of at least three duplicated portions of the digital source image.

6. The method of claim 1, wherein at least one of the plurality of duplicated portions of the selected modification area is comprised of less than 50 percent of the digital source image.

7. The method of claim 1, wherein each of the joints includes a point where three of the plurality of the identified internal borders meet each other.

8. A method comprising:
obtaining a repeat of a source image, the repeat including a plurality of at least portions of the source image repeated throughout a given area;
selecting a first modification area within the repeat, the first modification area including a plurality of the repeated portions;
identifying at least one border of each of the repeated portions within the first modification area, wherein the border includes one or more points where the repeated portions meet each other;
positioning at least one joint within the first modification area such that the joint is aligned along a center axis of the first modification area, wherein the joint includes a location where a plurality of the borders meet each other;
determining a plurality of locations where the identified borders meet the perimeter of the first modification area;
generating a second modification area within the first modification area, the second modification area comprised of:
the positioned at least one joint;
the identified at least one border; and
the determined plurality of locations; and
modifying, using an artificial intelligence (Al) model, the second modification area such that at least a part of one or more of the plurality of repeated portions of the first modification area is modified;
wherein modifying the first modification area alters the repeat of the source image.

9. The method of claim 8, wherein the second modification area is further comprised of:
one or more non-tapered sections; and
one or more tapered sections;
wherein the non-tapered sections are aligned with the borders and the tapered sections are positioned at each of the determined plurality of locations where the borders meet the perimeter of the first modification area.

10. The method of claim 9, wherein the narrowest point of each of the one or more tapered sections aligns with a corresponding one of the determined plurality of locations where the borders meet the perimeter of the first modification area.

11. The method of claim 9, wherein the one or more tapered sections are configured to facilitate modification of each of the determined plurality of locations such that modification along a vertical axis of the first modification area is simultaneous with modification along a horizontal axis of the first modification area.

12. The method of claim 8, wherein the plurality of repeated portions of the first modification area is comprised of at least three repeated portions of the source image.

13. The method of claim 8, wherein at least one of the plurality of repeated portions of the first modification area is comprised of less than 50 percent of the source image.

14. The method of claim 8, wherein each of the at least one joint includes a location where three of the plurality of the borders meet each other.

15. A system for modifying a repeating pattern of a digital source image, the system comprising:
at least one processor;
at least one memory; and
one or more non-transitory, computer-readable storage media storing instructions, which, when executed by the at least one processor, cause the system to:
obtain the repeating pattern of the digital source image, the repeating pattern including a plurality of at least portions of the digital source image duplicated throughout a given area;
select a modification area within the repeating pattern, the modification area including a plurality of the duplicated portions;
identify one or more internal borders of each of the duplicated portions within the modification area, wherein each of the internal borders includes one or more points where two of the duplicated portions meet each other;
position one or more joints within the modification area such that the joints are aligned along a center axis of the modification area, wherein each of the joints includes a point where a plurality of the identified internal borders meet each other;
determine a plurality of locations where the identified internal borders meet the perimeter of the modification area;
generate a selection area based on the positioned one or more joints, the identified one or more internal borders, and the determined plurality of locations; and
modify, using an artificial intelligence (Al) model, the generated selection area such that at least a part of one or more of the plurality of duplicated portions of the modification area is modified;
wherein modifying the modification area alters the repeating pattern of the digital source image.

16. The system of claim 15, wherein the generated selection area is further comprised of one or more non-tapered sections and one or more tapered sections, wherein the non-tapered sections are aligned with the one or more internal borders and the tapered sections are positioned at each of the determined plurality of locations where the internal borders meet the perimeter of the modification area.

17. The system of claim 16, wherein the narrowest point of each of the one or more tapered sections aligns with a corresponding one of the determined plurality of locations where the internal borders meet the perimeter of the modification area.

18. The system of claim 16, wherein the one or more tapered sections are configured to facilitate modification of each of the determined plurality of locations such that modification along a vertical axis of the modification area is simultaneous with modification along a horizontal axis of the modification area.

19. The system of claim 15, wherein the plurality of duplicated portions of the selected modification area is comprised of at least three duplicated portions of the digital source image.

20. The system of claim 15, wherein at least one of the plurality of duplicated portions of the selected modification area is comprised of less than 50 percent of the digital source image.
